# EUROPÄISCHE PATENTANMELDUNG

(11) **EP 1 512 907 A1**
(43) Veröffentlichungstag der Anmeldung: **09.03.2005**
(21) Anmeldenummer: 03020020.8
(22) Anmeldetag: 03.09.2003
(51) Int. Cl.: F22B 29/06, F22B 35/14, F22B 1/18

(54) **Verfahren zum Anfahren eines Durchlaufdampferzeugers und Durchlaufdampferzeuger zur Durchführung des Verfahrens**

(71) Anmelder: SIEMENS AKTIENGESELLSCHAFT, 80333 München (DE)
(72) Erfinder: Franke, Joachim, Dr., 90518 Altdorf (DE); Kral, Rudolf, 92551 Stulln (DE); Schiesser, Dieter, 91056 Erlangen (DE)

(57) **Zusammenfassung**

Ein Durchlaufdampferzeuger (1) mit einer in einem in einer annähernd horizontalen Heizgasrichtung (x) durchströmbaren Heizgaskanal (6) angeordneten Verdampfer-Durchlaufheizflächen (8), die eine Anzahl von zur Durchströmung eines Strömungsmediums (W) parallel geschalteten Dampferzeugerrohren (12) umfasst, und einer der Verdampfer-Durchlaufheizflächen (8) nachgeschalteten Überhitzerheizfläche (20), die eine Anzahl von zur Durchströmung des verdampften Strömungsmediums (W) parallel geschalteten Überhitzerrohren (22) umfasst, soll bei geringem Herstellungs- und Betriebsaufwand eine vergleichsweise einfache und flexible Steuerung der Temperatur (T) des Dampfes (D) am Austritt (24) der Überhitzerheizfläche (20) ermöglichen. Dazu wird der Verdampfungsendpunkt des Strömungsmediums (W) bedarfsweise in die Überhitzerrohre (22) verlegt. Dazu sind bei einem zur Durchführung dieses Verfahrens besonders geeigneten Durchlaufdampferzeuger (1) die Durchlaufheizflächen (8) und die Überhitzerheizfläche (20) derart zur einer funktionalen Einheit zusammengefasst, dass die Überhitzerheizfläche (20) als Verdampferheizfläche nutzbar ist.

## Beschreibung

Die Erfindung betrifft einen Durchlaufdampferzeuger in liegender Bauweise, bei dem in einem in einer annähernd horizontalen Heizgasrichtung durchströmbaren Heizgaskanal eine Verdampfer-Durchlaufheizfläche, die eine Anzahl von zur Durchströmung eines Strömungsmediums parallel geschalteten Dampferzeugerrohren umfasst, und eine der Verdampfer-Durchlaufheizfläche nachgeschaltete Überhitzerheizfläche, die eine Anzahl von zur Durchströmung des verdampften Strömungsmediums parallel geschalteten Überhitzerrohren umfasst, angeordnet sind. Sie betrifft weiter ein Verfahren zum Anfahren eines derartigen Durchlaufdampferzeugers.

Bei einer Gas- und Dampfturbinenanlage wird die im entspannten Arbeitsmittel oder Heizgas aus der Gasturbine enthaltene Wärme zur Erzeugung von Dampf für die Dampfturbine genutzt. Die Wärmeübertragung erfolgt in einem der Gasturbine nachgeschalteten Abhitzedampferzeuger, in dem üblicherweise eine Anzahl von Heizflächen zur Wasservorwärmung, zur Dampferzeugung und zur Dampfüberhitzung angeordnet sind. Die Heizflächen sind in den Wasser-Dampf-Kreislauf der Dampfturbine geschaltet. Der Wasser-Dampf-Kreislauf umfasst üblicherweise mehrere, z. B. drei, Druckstufen, wobei jede Druckstufe eine Verdampferheizfläche aufweisen kann.

Für den der Gasturbine als Abhitzedampferzeuger heizgasseitig nachgeschalteten Dampferzeuger kommen mehrere alternative Auslegungskonzepte, nämlich die Auslegung als Durchlaufdampferzeuger oder die Auslegung als Umlaufdampferzeuger, in Betracht. Bei einem Durchlaufdampferzeuger führt die Beheizung von als Verdampferrohren vorgesehenen Dampferzeugerrohren zu einer Verdampfung des Strömungsmediums in den Dampferzeugerrohren in einem einmaligen Durchlauf. Im Gegensatz dazu wird bei einem Natur- oder Zwangumlaufdampferzeuger das im Umlauf geführte Wasser bei einem Durchlauf durch die Verdampferrohre nur teilweise verdampft. Das dabei nicht verdampfte Wasser wird nach einer Abtrennung des erzeugten Dampfes für eine weitere Verdampfung den selben Verdampferrohren erneut zugeführt, wobei der verdampfte Anteil durch dem Verdampfungssystem neu zugeführtes Wasser ersetzt wird.

Ein Durchlaufdampferzeuger unterliegt im Gegensatz zu einem Natur- oder Zwangumlaufdampferzeuger keiner Druckbegrenzung, so dass Frischdampfdrücke weit über dem kritischen Druck von Wasser (P_{Kri} ≈ 221 bar) - wo es nur noch geringe Dichteunterschiede gibt zwischen flüssigkeitsähnlichem und dampfähnlichem Medium - möglich sind. Ein hoher Frischdampfdruck begünstigt einen hohen thermischen Wirkungsgrad und somit niedrige CO₂-Emissionen eines fossilbeheizten Kraftwerks. Zudem weist ein Durchlaufdampferzeuger im Vergleich zu einem Umlaufdampferzeuger eine einfache Bauweise auf und ist somit mit besonders geringem Aufwand herstellbar. Die Verwendung eines nach dem Durchlaufprinzip ausgelegten Dampferzeugers als Abhitzedampferzeuger einer Gas- und Dampfturbinenanlage ist daher zur Erzielung eines hohen Gesamtwirkungsgrades der Gas- und Dampfturbinenanlage bei einfacher Bauweise besonders günstig.

Besondere Vorteile hinsichtlich des Herstellungsaufwands, aber auch hinsichtlich erforderlicher Wartungsarbeiten bietet ein Abhitzedampferzeuger in liegender Bauweise, bei dem das beheizende Medium oder Heizgas, also das Abgas aus der Gasturbine, in annähernd horizontaler Strömungsrichtung durch den Dampferzeuger geführt ist. Ein solcher Dampferzeuger ist beispielsweise aus der EP 0 944 801 B1 bekannt.

Aus Wirkungsgrad- oder Emissionsgründen ist beim Anfahren eines Dampferzeugers eine möglichst kurze, so genannte Anfahrtszeit, also die Zeit bis zum Erreichen von Volllastbedingungen und thermischem Gleichgewicht der Anlagenkomponenten bei voller Beheizung, wünschenswert. Eine Gasturbine benötigt eine vergleichsweise kurze Zeit für den Anfahrvorgang oder für Lastwechselvorgänge. Das Abgas einer Gasturbine kann somit verhältnismäßig schnell eine hohe Temperatur annehmen. Eine kurze Anfahrzeit einer Gasturbine ist wünschenswert, weil dadurch die während des Anfahrvorgangs anfallenden Anfahrverluste und damit die Emissionen der Gasturbine gering gehalten werden.

Ist der Gasturbine, wie es in Gas- und Dampfturbinenanlagen der Fall ist, heizgasseitig eine Dampfturbine nachgeschaltet, wird die Abhitze der Gasturbine als Heizgas im Dampferzeuger der Dampfturbine genutzt. Aus technischen Gründen, insbesondere der thermischen Trägheit ihrer großen Massen, benötigt die Dampfturbine eine längere Anfahrzeit als die Gasturbine und gibt somit die untere Grenze für die erforderlichen Anfahrzeiten vor. Da die Gasturbine der Dampfturbine somit "vorauseilt", kann die Abhitze der Gasturbine während des Anfahrvorgangs der Gas- und Dampfturbinenanlage nicht vollständig vom Dampfkreislauf der Dampfturbine aufgenommen werden. Während des Anfahrvorgangs der Gas- und Dampfturbinenanlage wird deshalb üblicherweise der Hauptanteil des heißen Wasserdampfes über ein so genanntes Bypass-System an der Dampfturbine vorbei in den Kondensator geführt. Mit einem kleinen Anteil des Dampfstromes wird die Dampfturbine während dieses Vorgangs vorsichtig unter Vermeidung hoher Temperaturänderungsgeschwindigkeiten, die zu unzulässigen Materialspannungen führen würden, erwärmt. Erst nach diesem vergleichsweise langwierigen Anwärmvorgang der Dampfturbine kann diese mit der vollen Dampfmenge beaufschlagt werden und ihren Beitrag zur Gesamtleistung der Anlage liefern. Daher steht bei einem Anfahrvorgang während eines gewissen Zeitraumes nur die Gasturbinenleistung zur Verfügung.

Um diesen Zeitraum besonders kurz zu halten oder möglichst sogar ganz zu vermeiden, kann eine Kühlung des im Dampferzeuger entstandenen Dampfes vor dem Verlassen des Dampferzeugers auf ein den Materialtemperaturen der Dampfturbinenanlage angenähertes Temperaturniveau vorgenommen werden. Diese Kühlung ist umso aufwendiger, je weiter die Gasturbine der Dampfturbine beim Anfahren "vorauseilt".

Üblicherweise erfolgt die Kühlung durch den Einsatz einer Einspritzkühlung innerhalb der den Durchlaufheizflächen des Dampferzeugers nachgeschalteten Überhitzerheizflächen während des Anfahrvorganges der Gas- und Dampfturbinenanlage. Allerdings lässt sich die Temperatur des Dampfes beim Austritt aus dem Überhitzer mit Hilfe der Einspritzkühlung nur innerhalb gewisser Grenzen kontrollieren, so dass auch mit derartigen Maßnahmen im Allgemeinen noch eine gewisse Anwärmzeit der Dampfturbine verbleibt. Zudem ist der Einsatz der separaten Kühlvorrichtung technisch aufwendig.

Der Erfindung liegt daher die Aufgabe zugrunde, ein Verfahren zum Anfahren eines Durchlaufdampferzeugers der oben genannten Art anzugeben, mit dem mit vergleichsweise einfachen Mitteln zuverlässig die Temperatur des aus den Rohren der Überhitzerheizfläche austretenden Dampfes gesteuert und vergleichsweise kurze Anfahrzeiten erreicht werden können. Des Weiteren soll ein zur Durchführung des Verfahrens besonders geeigneter Durchlaufdampferzeuger der oben genannten Art angegeben werden.

Bezüglich des Verfahrens wird diese Aufgabe erfindungsgemäß gelöst, indem der Verdampfungsendpunkt des Strömungsmediums vorübergehend in die Überhitzerrohre verlegt wird.

Die Erfindung geht dabei von der Überlegung aus, dass zur Reduzierung des technischen Aufwandes bei Montage und Betrieb des Dampferzeugers die zur Ermöglichung kurzer Anfahrzeiten der Gasturbine nötige Kühlung der Überhitzerheizfläche auf besonders einfache Art erfolgen sollte. Daher sollten separate Kühlvorrichtungen, wie beispielsweise Einspritzkühler, nach Möglichkeit vermieden werden. Eine Einsparung separater Kühlvorrichtungen ist dadurch erreichbar, dass zur Vermeidung einer übermäßigen Aufheizung des Dampfes ein nach Durchlaufen der Verdampferheizfläche noch nicht verdampfter, also noch im flüssigen Zustand befindlicher Anteil des Strömungsmediums zur Durchströmung der Überhitzerheizflächen bereitgestellt wird. Dazu sollte ein Wasser-Dampf-Gemisch in die Rohre der Überhitzerheizfläche eintreten, was durch eine erhöhte Speisewasserzufuhr erreichbar ist. Um dies zu ermöglichen, sollten die Verdampferheizfläche und die Überhitzerheizfläche zu einer funktionalen Einheit zusammengefasst werden. Auf diese Weise wird ein direktes Überströmen des Flüssigmedium-Dampfgemisches aus den Verdampferrohren in die Überhitzerrohre ermöglicht. Der Verdampfungsendpunkt für das Strömungsmedium wird somit bei Bedarf in die Rohre der Überhitzerheizfläche verlegt.

Die Temperatur des der Dampfturbine zugeführten Dampfes am Austritt der Überhitzerheizfläche ist dabei vorteilhafterweise direkt über den Speisewasserstrom steuerbar. Auf diese Weise kann beispielsweise während des Anfahrvorganges oder während eines Lastwechsels der Gas- und Dampfturbinenanlage sichergestellt werden, dass innerhalb der Dampferzeugerrohre der Überhitzerheizfläche genügend Flüssigmedium vorhanden ist, welches ohne Temperaturerhöhung durch Verdampfen Wärme aufnimmt und die Überhitzung des Dampfes am Austritt der Überhitzerheizfläche damit herabsetzt. Im Normalbetrieb der Anlage hingegen, wenn die Temperaturen der Metallmassen der Dampfturbine den hohen Dampftemperaturen angeglichen sind, ist die niedrige Temperatur des Dampfes nicht erforderlich und es genügt, den Verdampfungsendpunkt des Strömungsmediums beispielsweise an den Austritt der Verdampfer-Durchlaufheizfläche zu legen. Dies ermöglicht eine besonders einfache und gleichzeitig sehr flexible Anpassung der Dampftemperatur am Austritt des Dampferzeugers an den Betriebszustand der Dampfturbine.

Zweckmäßigerweise wird die Lage des Verdampfungsendpunktes innerhalb der Überhitzerheizfläche oder der Verdampferheizfläche über die Höhe der Zufuhr von Strömungsmedium pro Zeiteinheit gesteuert. Auf diese Weise kann der Verdampfungsendpunkt auf eine besonders einfache und flexible Weise auf die Temperaturerfordernisse der Dampfturbine abgestimmt werden. Zur Erzielung niedriger Dampftemperaturen kann beispielsweise während des Anfahrvorganges der Gas- und Dampfturbinenanlage durch eine erhöhte Zufuhr von Strömungsmedium der Anteil von noch nicht verdampftem Strömungsmedium innerhalb der Überhitzerheizfläche schnell und ohne zusätzliche Einrichtungen zur Kühlung von zunächst stark überhitztem Dampf erhöht werden.

Bezüglich des Durchlaufdampferzeugers wird die Aufgabe erfindungsgemäß gelöst, indem die Verdampferheizfläche und die Überhitzerheizfläche des Dampferzeugers derart zu einer funktionalen Einheit zusammengeschaltet sind, dass der Verdampfungsendpunkt des Strömungsmediums in die Überhitzerheizfläche hinein verschiebbar ist.

Die bedarfsweise Nutzung der überhitzerheizfläche als Verdampferheizfläche stellt den besonders flexiblen und wenig aufwendigen Betrieb des Dampferzeugers in unterschiedlichen Betriebszuständen der Gas- und Dampfturbinenanlage sicher. Während des Normalbetriebs der Gas- und Dampfturbinenanlage ist es nicht notwendig und sogar aus Gründen der Effizienz nicht wünschenswert, die Überhitzerheizfläche des Dampferzeugers als Verdampferheizfläche zu nutzen. Vielmehr sollte der Dampferzeuger so ausgelegt sein, dass das Strömungsmedium am Austritt der Verdampferheizfläche bereits vollständig verdampft ist, um anschließend in den Rohren der der Verdampferheizfläche strömungsmediumseitig nachgeschalteten Überhitzerheizfläche überhitzt zu werden. Während des Anfahrvorganges der Gas- und Dampfturbinenanlage ist es hingegen wünschenswert, dass unverdampftes Strömungsmedium in den Überhitzer gelangt und dort verdampft, also latente Wärme aufnimmt, und auf diese Weise die Temperatur des Dampfes am Austritt der Überhitzerheizfläche herabsetzt. Die dazu vorgesehene strömungsmediumseitige Zusammenschaltung von Verdampfer-Durchlaufheizfläche und Überhitzerheizfläche erfolgt dabei vorzugsweise durch bewussten Verzicht auf eine Zwischenschaltung der üblicherweise vorgesehenen Wasserabscheiders zwischen Verdampfer- und Überhitzerheizfläche.

Aufgrund der Zusammenfassung von Durchlauf- und Überhitzerheizfläche zu einer Einheit besteht keine Notwendigkeit mehr für den Einsatz eines gemeinsamen Austrittssammlers für die Dampfströme aus den heizgasseitig parallelen Rohren einer Rohrreihe der Verdampferheizfläche und für eine Neuverteilung der Strömung auf die Parallelrohre der Überhitzerheizfläche. Im Gegenteil ist vorzugsweise vorgesehen, in der Art von strömungsmediumseitig parallel geschalteten Einzelsträngen ohne abschnittsweise Querkommunikation den Überhitzerrohren strömungsmediumseitig jeweils eine Anzahl individuell zugeordneter Dampferzeugerrohre vorzuschalten, so dass zwischen Verdampfer- und überhitzerheizfläche gerade keine Neuverteilung des Strömungsmediums vorgenommen wird. Daher besteht auch kein Risiko einer Entmischung von flüssiger und Dampfphase des Strömungsmediums. Eine Überspeisung des Verdampfers, also die Erhöhung der Zufuhr von Strömungsmedium derart, dass das Strömungsmedium nicht vollständig innerhalb der Rohre der Verdampferheizfläche verdampfen kann, und die Überleitung des Flüssigmedium-Dampfgemisches aus den Rohren der Verdampfer- in die der Überhitzerheizfläche ist damit problemlos möglich und kann somit zur bedarfsweisen Absenkung der Dampftemperaturen am Austritt der Überhitzerheizfläche beim Anfahren oder bei Lastwechseln eingesetzt werden.

Die Zusammenführung der Strömung aus strömungsmediumseitig parallel geschalteten, in der Art einer Rohrzeile heizgasseitig hintereinander angeordneten Dampferzeugerrohren und die Überleitung in die Überhitzerrohre erfolgt zweckmäßigerweise jeweils durch eine geeignet ausgelegte Sammler-Verteilereinheit, wobei vorteilhafterweise strömungsmediumseitig parallel geschalteten, heizgasseitig hintereinander angeordneten Dampferzeugerrohren jeweils ein gemeinsamer, mit seiner Längsachse im Wesentlichen parallel zur Heizgasrichtung ausgerichteter Sammler nachgeschaltet ist. Dabei ist die Anzahl der Sammler zweckmäßigerweise gleich der Anzahl der innerhalb einer sich quer zur Heizgasrichtung erstreckenden Rohrreihe angeordneten Dampferzeugerrohre, so dass innerhalb einer Rohrreihe jedem Dampferzeugerrohr genau ein Sammler eindeutig zugeordnet ist.

Vorteilhafterweise ist der Überhitzerheizfläche strömungsmediumseitig ein Abscheider nachgeschaltet. Dieser stellt sicher, dass eventuell noch nicht verdampftes, also auch nach Durchlaufen der Überhitzerheizfläche noch flüssiges Strömungsmedium nicht in die Dampfturbine gelangen kann.

Ein besonders hohes Maß an Strömungsstabilität und ein besonders günstiges Beheizungsprofil sind bei nur geringem baulichen und konstruktiven Aufwand erreichbar, indem vorteilhafterweise eine Aufteilung der Dampferzeugerrohre der Durchlaufheizfläche in jeweils zumindest drei Segmente (von parallelen Rohren) vorgesehen ist, wobei das erste Segment eines jeden Rohres ein Steigrohrstück umfasst und in Aufwärtsrichtung durchströmt wird. Entsprechend umfasst das zweite Segment ein Fallrohrstück und wird in Abwärtsrichtung durchströmt. Dabei sind die das zweite Segment bildenden Fallrohrstücke jedes Dampferzeugerrohrs im Heizgaskanal in Heizgasrichtung gesehen jeweils hinter den ihnen zugeordneten Steigrohrstücken angeordnet. Das dritte Segment umfasst weitere Steigrohrstücke und wird in Aufwärtsrichtung durchströmt.

Dabei sind die Segmente des oder jedes Dampferzeugerrohres im Heizgaskanal vorteilhafterweise derart positioniert, dass der Beheizungsbedarf jedes einzelnen Segments in besonderem Maße an das lokale Wärmeangebot im Heizgaskanal angepasst ist. Dazu sind die das dritte Segment bildenden weiteren Steigrohrstücke jedes Dampferzeugerrohrs im Heizgaskanal in Heizgasrichtung gesehen jeweils zwischen den ihnen zugeordneten Steigrohrstücken des ersten und den Fallrohrstücken des zweiten Segments angeordnet. Bei einer derartigen Anordnung ist somit das jeweils erste Steigrohrstück, das einer teilweisen Vorwärmung und zum großen Teil bereits der Verdampfung des Strömungsmediums dient, einer vergleichsweise starken Beheizung durch das Heizgas im "heissen Rauchgasgebiet" ausgesetzt. Dadurch ist sichergestellt, dass im gesamten Lastbereich aus dem jeweiligen ersten Steigrohrstück Strömungsmedium mit vergleichsweise hohem Dampfgehalt abströmt. Dies führt bei der nachfolgenden Einleitung in das nachgeschaltete Fallrohrstück dazu, dass im Fallrohrstück ein für die Strömungsstabilität ungünstiges Aufsteigen von Dampfblasen entgegen der Strömungsrichtung des Strömungsmediums konsequent vermieden wird. Durch die Anordnung des Fallrohrstückes im "kalten Rauchgasbereich" und die Anordnung des weiteren Steigrohrstückes zwischen dem ersten Steigrohrstück und dem Fallrohrstück wird also durch die somit erzielte hohe Strömungsstabilität eine besonders hohe Effizienz der Verdampfer-Heizflächen sichergestellt.

Zweckmäßigerweise wird der Dampferzeuger als Abhitzedampferzeuger einer Gas- und Dampfturbinenanlage verwendet. Dabei ist der Dampferzeuger vorteilhafterweise heizgasseitig einer Gasturbine nachgeschaltet. Bei dieser Schaltung kann zweckmäßigerweise hinter der Gasturbine eine Zusatzfeuerung zur Erhöhung der Heizgastemperatur vorgesehen sein.

Die mit der Erfindung erzielten Vorteile bestehen insbesondere darin, dass auf besonders einfache und technisch wenig aufwendige Weise durch Nutzung des eigentlichen Strömungsmediums eine besonders flexible Abstimmung der Temperatur des Dampfes am Austritt der Überhitzerheizfläche auf den Betriebszustand der Dampfturbine während des Anfahrvorgangs ermöglicht wird, so dass die Wartezeit bis zur Beaufschlagung der Dampfturbine mit Dampf zur Leistungsabgabe und der damit verbundene Leistungsverzug während des Anfahrens auf besonders einfache Weise besonders gering gehalten werden können.

Besonders vorteilhaft ist dabei der Verzicht auf komplexe separate Kühleinrichtungen wie beispielsweise eine Einspritzkühlung. Die Nutzung des Flüssiganteils des Strömungsmediums und seine Kapazität zur Aufnahme latenter Wärme ermöglichen eine besonders flexible und einfache Art der Steuerung und bedarfsweise eine Senkung der Temperatur des Dampfes am Austritt der Überhitzerheizfläche, wobei die bei der Einspritzkühlung vorgenommene Abkühlung heißen Dampfes mit anschließender Wiederaufwärmung nicht mehr erforderlich ist.

Ein Ausführungsbeispiel der Erfindung wird anhand einer Zeichnung näher erläutert. Darin zeigen:
- FIG 1: in vereinfachter Darstellung im Längsschnitt einen Durchlaufdampferzeuger in liegender Bauweise, und
- FIG 2: einen Längsschnitt durch einen Sammler des Durchlaufdampferzeugers.

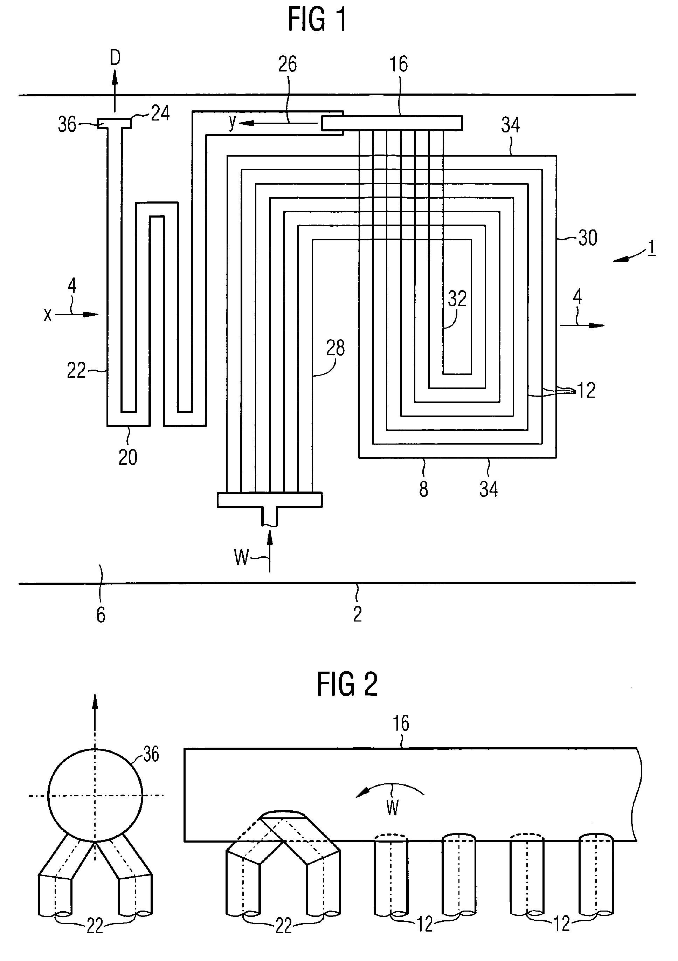

Der Durchlaufdampferzeuger 1 gemäß FIG 1 ist in der Art eines Abhitzedampferzeugers einer nicht näher dargestellten Gasturbine abgasseitig nachgeschaltet. Der Durchlaufdampferzeuger 1 weist eine Umfassungswand 2 auf, die einen in einer annähernd horizontalen, durch die Pfeile 4 angedeuteten Heizgasrichtung x durchströmbaren Heizgaskanal 6 für das Abgas aus der Gasturbine bildet. Im Heizgaskanal 6 ist jeweils eine Anzahl von nach dem Durchlaufprinzip ausgelegten Heizflächen für Vorwärmung, Verdampfung und Überhitzung des Strömungsmediums angeordnet. Im Ausführungsbeispiel gemäß FIG 1 ist für die Verdampfungssektion lediglich eine Verdampfer-Durchlaufheizfläche 8 gezeigt, es kann aber auch eine größere Anzahl von Durchlaufheizflächen vorgesehen sein.

Das aus der Verdampfer-Durchlaufheizfläche 8 gebildete Verdampfersystem ist mit Strömungsmedium W beaufschlagbar, das im normalen Lastbetrieb bei einmaligem Durchlauf durch die Verdampfer-Durchlaufheizfläche 8 vollständig verdampft wird.

Das aus der Verdampfer-Durchlaufheizfläche 8 gebildete Verdampfersystem ist in den nicht näher dargestellten Wasser-Dampf-Kreislauf einer Dampfturbine geschaltet.

Die Verdampfer-Durchlaufheizfläche 8 des Durchlaufdampferzeugers 1 nach FIG 1 umfasst in der Art eines Rohrbündels eine Mehrzahl von zur Durchströmung des Strömungsmediums W parallel geschalteten Dampferzeugerrohren 12. Dabei ist jeweils eine Mehrzahl von Dampferzeugerrohren 12 in Heizgasrichtung x gesehen nebeneinander angeordnet, so dass so genannte Rohrreihen gebildet sind. Dabei ist in FIG 1 jeweils lediglich eines der so nebeneinander angeordneten Dampferzeugerrohre 12 sichtbar. Eine Mehrzahl von Dampferzeugerrohren 12 sind in Heizgasrichtung x gesehen hintereinander angeordnet und bilden damit eine so genannte Rohrzeile. Den in einer Rohrzeile angeordneten Dampferzeugerrohren 12 ist dabei strömungsmediumseitig jeweils ein gemeinsamer Sammler 16 nachgeschaltet.

Der Verdampfer-Durchlaufheizfläche 8 ist strömungsmediumseitig eine ebenfalls im Heizgaskanal 6 angeordnete Überhitzerheizfläche 20 nachgeschaltet. Zusätzlich zu dem Verdampfersystem und der Überhitzerheizfläche 20 sind in den Wasser-Dampf-Kreislauf der Dampfturbine eine Anzahl weiterer, in FIG 1 nicht dargestellter Heizflächen geschaltet, bei denen es sich beispielsweise um Mitteldruckverdampfer, Niederdruckverdampfer und/oder um Vorwärmer handeln kann.

Der Durchlaufdampferzeuger 1 ist dafür ausgelegt, während des Anfahrvorgangs mit besonders einfachen Mitteln zuverlässig niedrige Dampftemperaturen am Austritt der die Überhitzerheizfläche 20 bildenden Überhitzerrohre 22 zu gewährleisten. Dazu ist vorgesehen, bedarfsweise den Verdampfungsendpunkt des Strömungsmediums W von den Dampferzeugerrohren 12 in die Überhitzerrohre 22 hinein zu verlagern, so dass aufgrund der Restverdampfung in den Überhitzerrohren 22 insbesondere im Anfahr- oder Teillastbereich durch geeignete Einstellung der Bespeisung der Dampferzeugerrohre 12 mit Strömungsmedium W eine besonders geringe Überhitzung erreichbar ist.

Die Sammler 16 sind dazu derart ausgelegt, dass sie das Überströmen des ganz oder teilweise verdampften Strömungsmediums W in die der Verdampfer-Durchlaufheizfläche 8 nachgeschalteten Überhitzerheizfläche 20 ermöglichen, ohne dass dabei eine Entmischung von flüssiger und Dampfphase des Strömungsmediums W erfolgt. Die Sammler-Verteilereinheit verbindet somit die Verdampfer-Durchlaufheizfläche 8 und die Überhitzerheizfläche 20 derart zu einer funktionalen Einheit, dass der Verdampfungsendpunkt des Strömungsmediums W in die Überhitzerheizfläche 20 hinein verschiebbar ist.

In den die Überhitzerheizfläche 20 bildenden Überhitzerrohren 22 wird der in der Verdampfereinheit aus dem Strömungsmedium W erzeugte Dampf D bei Normalbetrieb überhitzt. Die Anzahl der in Heizgasrichtung x nebeneinander angeordneten Überhitzerrohre 22 entspricht der Anzahl der Rohrzeilen des Verdampfersystems. Der in den Dampferzeugerrohren 12 einer Rohrzeile erzeugte Dampf D wird also jeweils in einem Sammler 16 gesammelt und jeweils einem oder in zwei Überhitzerrohren 22 zugeführt, so dass jedem Überhitzerrohr 22 strömungsmediumseitig jeweils eine Anzahl individuell zugeordneter Dampferzeugerrohre 12 vorgeschaltet ist. Das durch diese Anordnung verwirklichte direkte Überströmen aus dem Verdampfersystem in die Überhitzerrohre 22 ohne einen zwischen Verdampfersystem und Überhitzerheizfläche 20 geschalteten Abscheider ermöglicht das gezielte Verbringen von noch nicht verdampftem, also noch flüssigem Strömungsmedium W aus dem Verdampfersystem in die Überhitzerrohre 22. Durch die dadurch erzielte Verlegung des Verdampfungsendpunktes des Strömungsmediums W aus dem Verdampfersystem in die Überhitzerrohre 22 kann eine je nach Betriebszustand der Gas- und Dampfturbinenanlage erwünschte Senkung der Temperatur des Dampfes D am Austritt 24 der Überhitzerrohre 22 erreicht werden. Dies erfolgt durch Verdampfung des Flüssigmediumanteils in den Überhitzerrohren 22, also die bedarfsweise Nutzung der Überhitzerheizfläche 20 als Verdampferheizfläche.

Insbesondere während Anfahr- oder Lastwechselvorgängen der Gas- und Dampfturbinenanlage ist eine Absenkung der Temperatur des Dampfes D am Austritt 24 der Überhitzerrohre 22 erforderlich, da die Dampfturbine durch ihr im Vergleich zu dem der Gasturbine träges Verhalten nicht zulässt, dass die Dampftemperaturen beim Anfahren den Abgastemperaturen schnell folgen. Durch die bedarfsweise Nutzung der Überhitzerheizfläche 20 als Verdampferheizfläche kann auf besonders einfache und flexible Weise die Temperatur des Dampfes D am Austritt 24 der Überhitzerheizfläche 20 der niedrigeren Temperatur der Metallmassen der Dampfturbine angepasst, also abgesenkt werden.

Eine besonders flexible Einstellung der Dampftemperatur T am Austritt 24 der Überhitzerheizfläche 20 ist dadurch gewährleistet, dass der Verdampfungsendpunkt in einer durch den Pfeil 26 gekennzeichneten Strömungsrichtung y des Strömungsmediums W innerhalb der Überhitzerrohre 22 verschiebbar ist. Ein in Strömungsrichtung y vergleichsweise weit vorn, also in der Nähe der Sammler 16, liegender Verdampfungsendpunkt bedeutet eine geringe Wärmeaufnahmekapazität des Flüssigmedium-Dampfgemisches innerhalb der Überhitzerheizfläche 20 und damit eine vergleichsweise hohe Temperatur T des Dampfes D am Austritt 24 der Überhitzerheizfläche 20. Ist der Verdampfungsendpunkt jedoch in Strömungsrichtung y vergleichsweise weit in die Überhitzerrohre 22 hinein verschoben, das Strömungsmedium W also erst vergleichsweise spät vollständig verdampft, so ist die Wärmeaufnahmekapazität des Flüssigmedium-Dampfgemisches innerhalb der Überhitzerheizfläche 20 groß und die Temperatur T des Dampfes D am Austritt 24 der Überhitzerheizfläche 20 vergleichsweise niedrig.

Die Lage des Verdampfungsendpunktes in Strömungsrichtung y und damit die Temperatur T des Dampfes D am Austritt 24 der Überhitzerheizfläche 20 werden im Ausführungsbeispiel über die Zufuhr von Strömungsmedium W zu den Dampferzeugerrohren 12 gesteuert, d. h. über den Speisewasserstrom. Dazu wird die Pumpenleistung der Speisewasserpumpen von einer zentralen Kontroll- und Steuereinheit entsprechend angesteuert. Wird den Dampferzeugerrohren 12 eine vergleichsweise große Menge an Strömungsmedium W pro Zeiteinheit zugeführt, so reicht die durch das Heizgas zur Verfügung gestellte Wärmemenge nicht aus, um das Strömungsmedium W innerhalb der Verdampfer-Durchlaufheizfläche 8 vollständig zu verdampfen. Je höher also die den Dampferzeugerrohren 12 pro Zeiteinheit zugeführte Menge an Strömungsmedium W ist, desto höher ist der Flüssigmediumanteil im Flüssigmedium-Dampfgemisch, das aus dem Verdampfersystem über die Sammler-Verteilereinheit in die Überhitzerrohre 22 gelangt. Ein hoher Flüssigmediumanteil bedingt wiederum eine vergleichsweise große Wärmeaufnahmekapazität des Flüssigmedium-Dampfgemisches und eine vergleichsweise niedrige Austrittstemperatur T. Auf diese Weise lässt sich auf besonders einfache und flexible Weise allein durch eine Erhöhung der Zufuhr an Strömungsmedium W pro Zeiteinheit eine Senkung der Temperatur T des der Dampfturbine zugeführten Dampfes D erzielen und umgekehrt durch eine Senkung der Zufuhr eine Erhöhung der Temperatur T.

Die Verdampfer-Durchlaufheizfläche 8 ist darüber hinaus für eine besonders günstige Beheizungscharakteristik ausgelegt. Um dies mit besonders einfachen konstruktiven Mitteln auf besonders zuverlässige Weise sicherzustellen, umfasst die Verdampfer-Durchlaufheizfläche 8 drei strömungsmediumseitig in Reihe geschaltete Segmente. Im ersten Segment umfasst jedes Dampferzeugerrohr 12 der Verdampfer-Durchlaufheizfläche 8 dabei ein annähernd vertikal angeordnetes, vom Strömungsmedium W in Aufwärtsrichtung durchströmbares Steigrohrstück 28. Im zweiten Segment umfasst jedes Dampferzeugerrohr 12 ein dem Steigrohrstück 28 strömungsmediumseitig nachgeschaltetes, annähernd vertikal angeordnetes und vom Strömungsmedium W in Abwärtsrichtung durchströmbares Fallrohrstück 30. Im dritten Segment umfasst jedes Dampferzeugerrohr 12 ein dem Fallrohrstück 30 strömungsmediumseitig nachgeschaltetes, annähernd vertikal angeordnetes und vom Strömungsmedium W in Aufwärtsrichtung durchströmbares weiteres Steigrohrstück 32. Das Fallrohrstück 30 ist mit dem ihm zugeordneten Steigrohrstück 28 dabei über ein Überströmstück 34 verbunden. In derselben Weise ist das weitere Steigrohrstück 32 mit dem ihm zugeordneten Fallrohrstück 30 über ein Überströmstück 34 verbunden. In Heizgasrichtung x gesehen ist das weitere Steigrohrstück 32 zwischen dem Steigrohrstück 28 und dem Fallrohrstück 30 angeordnet.

Die Verlegung des Verdampfungsendpunktes des Strömungsmediums W aus dem Verdampfersystem in die Überhitzerrohre 22 wird durch den Einsatz der in der FIG näher dargestellten Sammler 16 ermöglicht. Üblicherweise wird das am Austritt der Verdampfer-Durchlaufheizfläche 8 größtenteils verdampfte Strömungsmedium W in einem Austrittssammler gesammelt und durch einen Verteiler neu auf die den Dampferzeugerrohren 12 nachgeschalteten Überhitzerrohre 22 verteilt. Jedoch besteht beim Einsatz eines gemeinsamen Sammlers für die Dampferzeugerrohre 12 einer Rohrreihe und die dadurch erforderliche Neuverteilung des Strömungsmediums W auf die Überhitzerrohre 22 die Gefahr einer unerwünschten Entmischung von flüssiger und Dampfphase. Wenn dagegen wie im Ausführungsbeispiel auf gemeinsame Sammler und Verteiler für Dampferzeugerrohre 12 einer Rohrreihe verzichtet und stattdessen lediglich ein Sammler 16 für Dampferzeugerrohre 12 einer Rohrzeile eingesetzt wird, besteht diese Gefahr nicht mehr. Das Flüssigmedium-Dampfgemisch strömt ohne Entmischung aus den Dampferzeugerrohren 12 einer Rohrzeile in den Sammler 16 und von dort in das nachgeschaltete Überhitzerrohr 22, ohne dass eine Neuverteilung des Strömungsmediums W erforderlich ist. Der üblicherweise zwischen Verdampfersystem und Überhitzerheizfläche 20 geschaltete Abscheider 36 wird an den Austritt 24 der Überhitzerrohre 22 gelegt.

## Patentansprüche

1. Verfahren zum Anfahren eines Durchlaufdampferzeugers (1) mit einer in einem in einer annähernd horizontalen Heizgasrichtung (x) durchströmbaren Heizgaskanal (6) angeordneten Verdampfer-Durchlaufheizfläche (8), die eine Anzahl von zur Durchströmung eines Strömungsmediums (W) parallel geschalteten Dampferzeugerrohren (12) umfasst, und mit einer der Verdampfer-Durchlaufheizfläche (8) strömungsmediumseitig nachgeschalteten Überhitzerheizfläche (20), die eine Anzahl von zur Durchströmung des verdampften Strömungsmediums (W) parallel geschalteten Überhitzerrohren (22) umfasst, bei dem der Verdampfungsendpunkt des Strömungsmediums (W) vorübergehend in die Überhitzerrohre (22) verlegt wird.

2. Verfahren nach Anspruch 1, bei dem die Temperatur des Strömungsmediums (W) an einem Austritt (24) der Überhitzerheizfläche (20) durch die Wahl der Lage des Verdampfungsendpunktes des Strömungsmediums (W) in der Überhitzerheizfläche (20) gesteuert wird.

3. Verfahren nach Anspruch 1 oder 2, bei dem der Verdampfungsendpunkt des Strömungsmediums (W) über die Einspeiserate des der Verdampfer-Durchlaufheizfläche (8) zugeführten Strömungsmediums (W) eingestellt wird.

4. Durchlaufdampferzeuger (1), bei dem in einem in einer annähernd horizontalen Heizgasrichtung (x) durchströmbaren Heizgaskanal (6) eine Verdampfer-Durchlaufheizfläche (8), die eine Anzahl von zur Durchströmung eines Strömungsmediums (W) parallel geschalteten Dampferzeugerrohren (12) umfasst, und eine der Verdampfer-Durchlaufheizfläche (8) nachgeschaltete Überhitzerheizfläche (20), die eine Anzahl von zur Durchströmung des verdampften Strömungsmediums (W) parallel geschalteten Überhitzerrohren (22) umfasst, angeordnet sind, wobei die Verdampfer-Durchlaufheizfläche (8) und die Überhitzerheizfläche (20) derart zu einer funktionalen Einheit zusammengeschaltet sind, dass der Verdampfungsendpunkt des Strömungsmediums (W) in die Überhitzerheizfläche (20) hinein verschiebbar ist.

5. Durchlaufdampferzeuger (1) nach Anspruch 4, bei dem jedem Überhitzerrohr (22) strömungsmediumseitig jeweils eine Anzahl individuell zugeordneter Dampferzeugerrohre (12) vorgeschaltet ist.

6. Durchlaufdampferzeuger (1) nach Anspruch 4 oder 5, bei dem strömungsmediumseitig parallel geschalteten, heizgasseitig hintereinander angeordneten Dampferzeugerrohren (12) jeweils ein gemeinsamer, mit seiner Längsachse im Wesentlichen parallel zur Heizgasrichtung (x) ausgerichteter Sammler (16) nachgeschaltet ist.

7. Durchlaufdampferzeuger (1) nach Anspruch 6, bei dem die Anzahl der Sammler (16) gleich der Anzahl der innerhalb einer sich quer zur Heizgasrichtung (x) erstreckenden Rohrreihe angeordneten Dampferzeugerrohre (12) ist.

8. Durchlaufdampferzeuger (1) nach einem der Ansprüche 4 bis 7, bei dem der Überhitzerheizfläche (20) strömungsmediumseitig ein Abscheider (26) nachgeschaltet ist.

9. Durchlaufdampferzeuger (1) nach einem der Ansprüche 4 bis 8, bei dem ein oder jedes Dampferzeugerrohr (12) jeweils ein annähernd vertikal angeordnetes, vom Strömungsmedium (W) in Aufwärtsrichtung durchströmbares Steigrohrstück (28), ein diesem strömungsmediumseitig und in Heizgasrichtung (x) nachgeschaltetes, annähernd vertikal angeordnetes und vom Strömungsmedium (W) in Abwärtsrichtung durchströmbares Fallrohrstück (30) und ein letzterem strömungsmediumseitig nachgeschaltetes, annähernd vertikal angeordnetes und vom Strömungsmedium (W) in Aufwärtsrichtung durchströmbares weiteres Steigrohrstück (32) umfasst, das in Heizgasrichtung (x) gesehen zwischen dem Steigrohrstück (28) und dem Fallrohrstück (30) angeordnet ist.

10. Durchlaufdampferzeuger (1) nach einem der Ansprüche 4 bis 9, dem heizgasseitig eine Gasturbine vorgeschaltet ist.
